# EUROPEAN PATENT SPECIFICATION

(11) **EP 2 403 205 B1**
(45) Date of publication and mention of the grant of the patent: **22.05.2013**
(21) Application number: 11159703.5
(22) Date of filing: 25.03.2011
(51) Int. Cl.: H04L 29/06

(54) **Streaming data delivery system and method thereof**
System zur Verteilung von Streamingdaten und entsprechendes Verfahren
Système de fourniture de données en continu et procédé correspondant

(30) Priority: 30.06.2010 JP 2010149245
(43) Date of publication of application: 04.01.2012
(73) Proprietor: Hitachi Ltd., Tokyo 100-8280 (JP)
(72) Inventor: Hayashi, Naoki, Tokyo 100-8220 (JP); Kaji, Tadashi, Tokyo 100-8220 (JP); Yamamoto, Dan, Tokyo 100-8220 (JP); Irube, Shinichi, Tokyo 100-8220 (JP)
(74) Representative: MERH-IP Matias Erny Reichl Hoffmann

(56) References cited:
- US-A1- 2009 132 717
- CAMARILLO ERICSSON E BURGER BROOKTROUT H SCHULZRINNE COLUMBIA UNIVERSITY A VAN WIJK VIATAAL G: "Transcoding Services Invocation in the Session Initiation Protocol (SIP) Using Third Party Call Control (3pcc); rfc4117.txt", IETF STANDARD, INTERNET ENGINEERING TASK FORCE, IETF, CH, 1 June 2005 (2005-06-01), XP015041884, ISSN: 0000-0003
- Sumiko Shirata ET AL: "A Dynamic Service Composition Mechanism using SIP 3rd Party Call Control", , 1 March 2006 (2006-03-01), pages 1-1, XP55007267, [retrieved on 2011-09-15]

## Description

### BACKGROUND

The present invention relates to a technique for delivery of streaming data, particularly, to a technique that processes and provides streaming data in real time.

Recently, services handling streaming data, such as IP (Internet Protocol) telephony, teleconference systems, and motion video delivery have become widely used.

For the delivery of streaming data, a streaming processing technique is becoming put into use. In such technique, instead of providing data from a delivery source directly to a delivery destination, data is delivered in such a way that it is forwarded via processing servers deployed along a communication path and processed and edited in real time by the processing servers in the course of data transmission.

By utilizing the streaming processing technique, for example, in motion video delivery, motion video data located on a server can be provided, while its format is converted into a format available to a receiving terminal of a user. Thereby, it becomes no longer necessary to prepare various formats of motion video data by encoding one type of content into these formats of data on the server beforehand and the cost for such preparation can be reduced.

The streaming processing technique is used not only in streaming delivery of multimedia data such as motion video and audio data, as mentioned above, but also in Web service systems for finance, settlement, and the like that need to process a great deal of text data described in, for example, an XML (eXtensible Markup Language) format or the like.

To make use of the streaming processing technique, necessity is routing to forward streaming data via a suitable server or servers so that intended processing is performed. As a technique for such routing on a service layer, for example, a technique described in Shirata Sumiko, Morito Takashi, Honjo Masaru, Morikawa Daisuke, Minami Masateru, "A Dynamic Service Composition Mechanism Using SIP 3rd Party Call Control" The Institute of Electronics, Information and Communication Engineers (IEICE) General Conference (March, 2006) exists. In Shirata Sumiko, Morito Takashi, Honjo Masaru, Morikawa Daisuke, Minami Masateru, "A Dynamic Service Composition Mechanism Using SIP 3rd Party Call Control" The Institute of Electronics, Information and Communication Engineers (IEICE) General Conference (March, 2006), such a technique is disclosed in which, by using a standard protocol, an SIP (Session Initiation Protocol), information about media formats available to both parties is obtained by parsing SDP (Session Description Protocol) included in an SIP message, and routing processing for media format conversion needed is performed using SIP Third Party Call Control.

A further technique is disclosed in US 2009/132717 A1.

### SUMMARY

There is a recent trend of data delivery service to give an added value to the service that users enjoy by editing or tailoring information dynamically according to user context such as preference and charging status of each individual user, not only delivering static data to users.

However, information about such user context is not reflected in SDP for carrying session information. Therefore, in the technique disclosed in Shirata Sumiko, Morito Takashi, Honjo Masaru, Morikawa Daisuke, Minami Masateru, "A Dynamic Service Composition Mechanism Using SIP 3rd Party Call Control" The Institute of Electronics, Information and Communication Engineers (IEICE) General Conference (March, 2006), a session between a delivery server and a user terminal has to be established only after a stage of obtaining information about both a format of streaming data for delivery and a format processible by the user terminal receiving the delivery and a procedure until the session establishment involves a large number of steps. A larger number of steps will be involved in order to implement service routing to give an added value to the delivery service other than format conversion.

To solve a problem as discussed above, a streaming data delivery system is configured as follows. The streaming data delivery system according to independent claim 1 includes a streaming data delivery device using an SIP, a server for provisional coupling using an SIP, a plurality of format conversion servers using an SIP which perform format conversion of streaming data, a user terminal using an SIP, a 3PCC (Third Party Call Control) device which implements SIP Third Party Call Control, and a service routing computer which transmits a command to establish a session between the streaming data delivery device and the user terminal.

The 3PCC device, which receives the command to establish the session, obtains information about a first format available to the user terminal from the user terminal and establishes a session between the user terminal and the server for provisional coupling. The 3PCC device also obtains information about a second format of streaming data that the streaming data delivery device delivers from the streaming data delivery device and establishes a session between the streaming data delivery device and the server for provisional coupling. Further, the 3PCC device selects a format conversion server that converts the second format of the streaming data into the first format from the plurality of format conversion servers, transfers the session between the streaming data delivery device and the server for provisional coupling into a session between the streaming data delivery device and the selected format conversion server, and transfers the session between the user terminal and the server for provisional coupling into a session between the user terminal and the selected format conversion server.

The invention is further embodied by the method according to independent claim 6.

In the streaming data delivery system in another preferred aspect, the service routing computer includes a user attribute information database which stores user attribute information for each user who uses a user terminal, a delivery policy database which stores a correlation between an identifier of an item of streaming data and user attribute information as a delivery policy, and a processing server list which correlates and stores a processing task to be performed for streaming data according to a delivery policy and an identifier of a processing server that performs the processing task. The service routing computer refers to the delivery policy database based on user attribute information from the user attribute information database and identifies a processing server that is to perform a processing task to be performed for the streaming data, and transmits a command to establish a session between the streaming data delivery device and the processing server and a command to establish a session between the processing server and the selected format conversion server in order to route the streaming data via the identified processing server. The 3PCC device, in response to the command to establish a session between the streaming data delivery device and the processing server, transfers the session between the streaming data delivery device and the server for provisional coupling into a session between the streaming data delivery device and the identified processing server, instead of transferring the session between the streaming data delivery device and the server for provisional coupling into a session between the streaming data delivery device and the selected format conversion server. Also, the 3PCC device, in response to the command to establish a session between the identified processing server and the selected format conversion server, establishes the session between the identified processing server and the selected format conversion server.

According to the teaching herein, it is possible to curtail the procedure until a session is established between the delivery server and the user terminal.

These and other benefits are described throughout the present specification. A further understanding of the nature and advantages of the invention may be realized by reference to the remaining portions of the specification and the attached drawings.

### BRIEF DESCRIPTION OF THE DRAWINGS

Fig. 1 presets an example of a streaming data delivery service system;
Fig. 2 illustrates an exemplary hardware structure of a computer;
Fig. 3 presents an exemplary data structure of user information;
Fig. 4 presents an exemplary data structure of user setting;
Fig. 5 presents an exemplary data structure of a delivery data list;
Fig. 6 presents an exemplary data structure of delivery policy;
Fig. 7 presents an exemplary data structure of a processing server list;
Fig. 8 presents an exemplary data structure of a format conversion server list;
Fig. 9 presents an exemplary data structure of processing server locations;
Fig. 10A presents an exemplary sequence illustrative of the operation of the streaming data delivery service system;
Fig. 10B presents an exemplary sequence illustrative of the operation of the streaming data delivery service system;
Fig. 10C presents an exemplary sequence illustrative of the operation of the streaming data delivery service system; and
Fig. 11 presents an exemplary processing flow for determining a service route.

### DETAILED DESCRIPTION OF PREFERRED EMBODIMENT

A streaming data delivery system of an embodiment includes a streaming data delivery device using SIP, a server for provisional coupling using SIP, a plurality of format conversion servers using an SIP which perform format conversion of streaming data, a user terminal using SIP, a 3PCC device which implements SIP 3rd Party Call Control, and a service routing computer which transmits a command to establish a session between the streaming data delivery device and the user terminal.

The 3PCC device having received the command to establish the session obtains information about a format available to the user terminal from the user terminal and establishes a session between the user terminal and the server for provisional coupling. The 3PCC device also obtains information about a format of streaming data to be delivered by the streaming data delivery device from the streaming data delivery device and establishes a session between the streaming data delivery device and the server for provisional coupling. Further, the 3PCC device selects a format conversion server that converts the streaming data format into the format available to the user terminal from the plurality of format conversion servers. Further, the 3PCC device transfers the session between the streaming data delivery device and the server for provisional coupling as a session between the streaming data delivery device and the selected format conversion server and transfers the session between the user terminal and the server for provisional coupling as a session between the user terminal and the selected format conversion server.

In order to provide a user with services other than format conversion in streaming data delivery, the service routing computer has a user attribute information database which stores user attribute information for each user who uses a user terminal, a delivery policy database which stores a correlation between an identifier of an item of streaming data and user attribute information as a delivery policy, and a processing server list which correlates and stores a processing task to be performed for streaming data according to a delivery policy and an identifier of a processing server that performs the processing task. The service routing computer refers to the delivery policy database based on user attribute information from the user attribute information database and identifies a processing server that is to perform a processing task to be performed for streaming data. In order to route the streaming data via the identified processing server, the service routing computer transmits a command to establish a session between the streaming data delivery device and the processing server and a command to establish a session between the processing server and the selected format conversion server. The 3PCC device, in response to the command to establish a session between the streaming data delivery device and the processing server, transfers the session between the streaming data delivery device and the server for provisional coupling as a session between the streaming data delivery device and the identified processing server, instead of transferring the session between the streaming data delivery device and the server for provisional coupling as a session between the streaming data delivery device and the selected format conversion server. Also, the 3PCC device, in response to the command to establish a session between the identified processing server and the selected format conversion server, establishes the session between the identified processing server and the selected format conversion server.

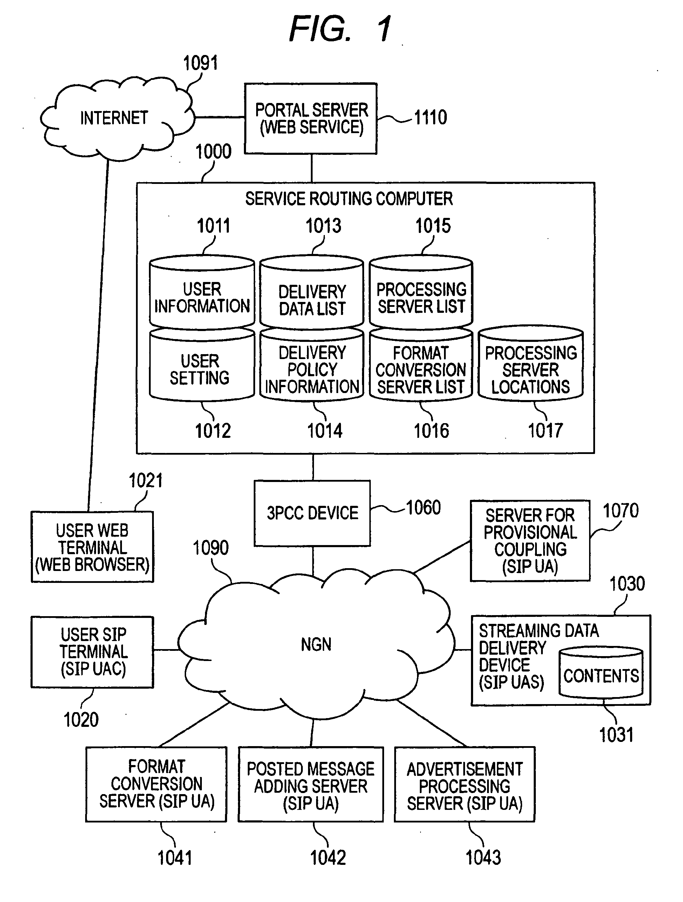

Fig. 1 presents an example of a streaming data delivery service system. In Fig. 1, a streaming data delivery device 1030, a format conversion server 1041, a posted message adding server 1042, an advertisement processing server 1043, a user SIP terminal 1020, a server for provisional coupling 1070, and a 3PCC (3rd Party Call Control) device 1060 are coupled via an NGN (Next Generation Network) 1090. Descriptions about each of these system components will be provided later.

The 3PCC device 1060 is further coupled to a service routing computer 1000. The service routing computer 1000 is further coupled to a portal server 1110. Descriptions about each of these system components will be provided later.

The portal server 1110 is further coupled to a user Web terminal 1021 via the Internet 1091. Descriptions about each of these system components will be provided later.

The following will describe each of the system components shown in Fig. 1. The service routing computer 1000 is a computer that determines a route for delivering streaming data held on the streaming data delivery device 1030 to a user SIP terminal 1020 and transmits the determined route to the 3PCC device 1060.

The service routing computer 1000 is provided with databases for storing a list of registered users and their charging information (user information 1011), user preference information (user setting 1012), a list of streaming data for delivery (delivery data list 1013), policy information set for each streaming data item for delivery by a system administrator

(delivery policy 1014), a list of processing servers (processing server list 1015), a list of servers responsible for format conversion of streaming data (format conversion server list 1016), and information about the locations of streaming processing servers (processing server locations 1017). Descriptions about data structures for each of these databases will be provided later.

The service routing computer 1000 determines a route (a series of servers) via which streaming data for delivery is to be forwarded, using the following information: a format of streaming data for delivery and a format available to a user's SIP terminal 1020 received from the 3PCC device 1060; and information from the databases for user information 1011, user setting 1012, delivery data list 1013, delivery policy information 1014, processing server list 1015, format conversion server list 1016, and processing server locations 1017. Details about processing for determining a route will be described later.

Both the user SIP terminal 1020 and the user Web terminal 1021 are terminals that are used by a user who uses the streaming data delivery service. The user SIP terminal 1020 is capable of establishing a session with a server that delivers or relays (forwards) streaming data using SIP and receiving the streaming data. The user Web terminal 1021 is coupled to the portal server 1110 via the Internet 1091 and transmits a request for streaming data delivery to the portal server 1110, using HTTP (HyperText Transfer Protocol).

The streaming data delivery device 1030 holds streaming data of contents which can be delivered to users in a contents database 1031, receives a request message for content delivery using SIP, and delivers content corresponding to that specified in the request message. The content corresponding to that specified in the request message is distinguished by, for example, an SIP URI (Uniform Resource Identifier) specific to each content item (streaming data).

The format conversion server 1041, posted message adding server 1042, and advertisement processing server 1043 are all service servers (processing servers) that perform streaming processing for services suitable for users. These servers receive streaming data, perform predefined processing on the received streaming data, and transmit the processed streaming data. In the foregoing general description, the format conversion server 1041 is seen like it differs from the processing servers. However, it may be regarded as a service server that performs streaming processing for services suitable for users or treated like a processing server, as it is selectively incorporated in a path of streaming data from the streaming data delivery device 1030 up to an SIP terminal 1020.

In the case of the format conversion server 1041, the predefined processing on the received streaming data means converting a format of streaming data for delivery into a data format available to a user's SIP terminal 1020.

In the case of the posted message adding server 1042, the predefined processing on the received streaming data means tailoring the streaming data to fit in with policy information set for each streaming data item for delivery by the service administrator and user preference information. For example, this processing is to add a message such as a comment posted by a user who uses the service and, possibly, related recommended information to the streaming data, so that such message will be superimposed on the displayed content corresponding to the streaming data.

In the case of the advertisement processing server 1043, the predefined processing on the received streaming data means adding an advertisement message to the streaming data to fit in with policy information set for each streaming data item for delivery by the service administrator and user charging information, so that the advertisement message will be superimposed on the displayed content.

The foregoing predefined processing tasks are exemplary and processing tasks that can be implemented in the present system are not limited to the foregoing tasks. For instance, such streaming processing may be included that adds a time stamp and a user ID (Identity) as digital watermark information to the streaming data in order to protect the content provided. The number of types of processing is not limited to the foregoing three types, either. Any processing may be included that provides a service suitable for users, selectively using the following: a format of streaming data for delivery; a format available to a user's SIP terminal 1020; policy information set for each streaming data item for delivery by the service administrator; user preference information; and user charging information.

Each of the service servers of the format conversion server 1041, posted message adding server 1042, and advertisement processing server 1043 may serve as an SIP UAC (User Agent Client) that can establish a session with another SIP UAS (User Agent Server) device according to a message sequence of SIP 3rd Party Call Control. Each of these service servers may also serve as an SIP UAS that can establish another SIP UAC device according to the message sequence of SIP 3rd Party Call Control. A service server serving as an SIP UAC establishes a session with another SIP UAS device and receives streaming data via the established session. In the meantime, a service server serving as an SIP UAS establishes a session with another SIP UAC device and transmits streaming data processed by any of the foregoing predefined processing tasks via the established session.

The 3PCC device 1060 is an SIP server and performs call control of an SIP UA coupled to the NGN 1090. The 3PCC device 1060 has a Web interface for communication with the service routing computer 1000. As the Web interface, Parlay X using SOAP (Simple Object Access Protocol) is already formulated as a standard interface. In the present embodiment, the system operation, which will be described later, is implemented by using Third Party Call WebService stipulated in Parlay X.

The server for provisional coupling 1070 serves as an SIP UAS when it communicates with a user SIP terminal 1020 and serves as an SIP UAC when it communicates with the streaming data delivery device 1030. The server for provisional coupling 1070, when having received a session establishment request (INVITE message) including SDP (Session Description Protocol) offer from another SIP UA, always returns a 2000K message that carries SDP answer indicating that it can establish a session. The SDP answer indicating that it can establish a session is to include the attributes in the media description fields included in the received SDP offer, as they are, without deleting them at all. Usage of the server for provisional coupling 1070 will be described later in an example of the system operation.

The portal server 1110 is a server that opens Web pages acting as a portal for the streaming data delivery service via the Internet 1091. The portal server 1110 authenticates a user who transmits a request for streaming data delivery via the Internet 1091 and transmits the service routing computer 1000 the user ID, the user charging information, the identifier of streaming data requested for delivery by the user, and SIP URI for the user to receive streaming data.

If the user is an anonymous guest user, "guest" is used as the user ID. User charging information may include given values assigned to each individual user, for example, as follows: "0" for an anonymous guest user; "1" for a user who has a user ID that is issued free of charge; and "2" for a user who has a user ID that is issued to have access to a charged service.

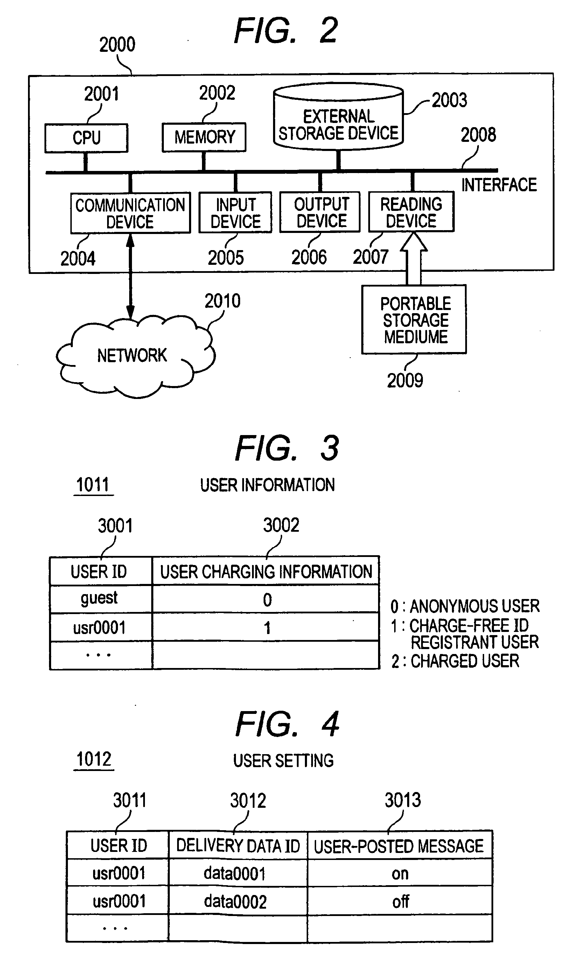

The system components such as the service routing computer 1000 and portal server 1110 shown in Fig. 1 are general-purpose computers which are generally called computers, servers, PCs, etc. Fig. 2 illustrates an exemplary hardware structure of a computer as each one of these components. This computer 2000 includes a CPU 2001, a memory 2002, a communication device 2004 for communication with another device via a network 2010 such as the Internet or LAN, an input device 2005 such as a keyboard and a mouse, an output device 2006 such as a monitor and a printer, a reading device 2007, and an external storage device 2003 such as a hard disk. These constituent elements of the computer are coupled via an interface 2008. In addition, it is possible to couple a portable storage medium 2009 like an IC card or USB memory to the reading device 2007.

The service routing computer 1000, user SIP terminal 1020, user Web terminal 1021, streaming data delivery device 1030, format conversion server 1041, posted message adding server 1042, advertisement processing server 1043, 3PCC device 1060, and portal server 1110 are embodied by loading programs that implement their functions into their memory 2002 and executing the programs by their CPU 2001. These programs may be stored beforehand in their external storage device 2003 or loaded from another device into their external storage device 2003 via the reading device 2007 or communication device 2004 and an available medium. Therefore, the 3PCC device 1060, streaming data delivery device 1030, and the servers such as the format conversion server 1041, posted message adding server 1042, and advertisement processing server 1043 do not need to be physically different entities. They may logically be configured on at least one computer 2000.

The available medium refers to, for example, a storage medium 2009 which is removably set in the reading device 2007 or a network to which the communication device 2004 can couple or carrier waves or digital signals which are propagated over the network. The programs may be stored once into the external storage device 2003 and, subsequently, loaded from there into the memory 2002 and executed by the CPU 2001, or may be loaded directly into the memory 2002 and executed by the CPU 2001 without being stored into the external storage device 2003.

In the following, exemplary data structures of information stored in the databases provided in the service routing computer 100 will be described in order, using Figs. 3 through 9.

Fig. 3 presents an exemplary data structure of user information 1011. In the user information 1011, user ID 3001 of a user registered to receive the streaming data delivery service and charging information 3002 for the user are correlated and stored. A string "guest" in the first row of the user ID 3001 column denotes a user ID that represents an anonymous user. In the user charging information 3002 column, a value of "0" represents an anonymous guest user, a value of "1" represents a user (charge-free user) having a charge-free ID registered to allow the user to receive the streaming data delivery service free of charge, and a value of "2" represents a user (charge user) who is charged to receive the streaming data delivery service.

Fig. 4 presents an exemplary data structure of user setting 1012. The user setting 1012 database includes a user ID 3001 column to store user ID, a delivery data ID 3012 column to store identification information about streaming data for delivery, and a user posted message 3013 column to store a flag indicating whether or not to add a message posted by the user to the streaming data to be delivered ("on": add, "off": not add), correlated to the combination of user ID 3011 and delivery data ID 3012. By opening an API (Application Program Interface) for changing the user setting 1012 to users, a user is allowed to store information into the user setting 1012 database via the API. The service routing computer 1000 refers to the user setting 1012 database and determines a route optimal for, e.g., "adding a message posted by the user to data to be delivered, when delivering data "data0001" to a user "usr0001". Thereby, the service provider can provide the streaming data delivery service based on user preference.

Although what to be added is only one, namely, the user posted message 3013 in the user setting 1012 database presented in Fig. 4, if a further item or items of information should be added, the user setting 1012 database may have as many additional columns as the number of items of information to be added.

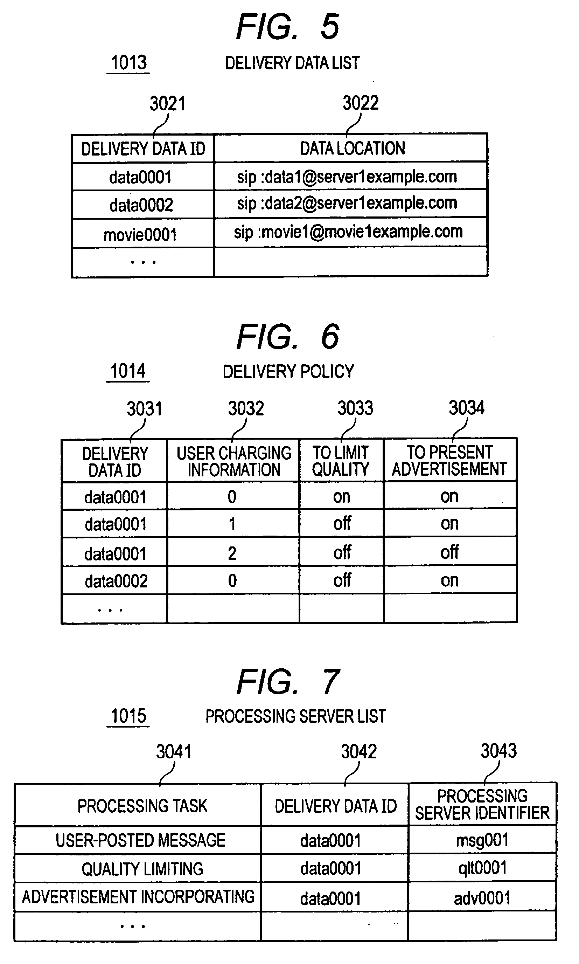

Fig. 5 presents an exemplary data structure of a delivery data list 1013. The delivery data list 1013 database lists deliverable streaming data items and correlates and holds delivery data ID 3021 which is the ID of each item of streaming data and the location 3022 of the streaming data item.

Fig. 6 presents an exemplary data structure of delivery policy 1014. The delivery policy 1014 database correlates and holds delivery data ID 3031 which is the ID of each item of deliverable streaming data, user charging information 3032, "to limit quality" 3033 indicating whether or not limit the quality (i.e., the quality of images to be displayed) of streaming data for delivery ("on": limit, "off": not limit), and "to present advertisement" 3034 indicating whether or not add an advertisement to the streaming data to be delivered (("on": add, "off": not add).

The user charging information 3032 has the same meaning as signified by the values of the user charging information 3002 in the user information 1011 database. That is, "0" represents an anonymous guest user, "1" represents a user having a charge-free ID registered, and "2" represents a user who is charged. The service routing computer 1000 refers to the delivery policy 1014 database and determines a route optimal for, e.g., "limiting the quality and adding an advisement, when delivering data "data0001" to an anonymous guest user". Thereby, the service provider can provide the streaming data delivery service depending on policy setting.

Fig. 7 presents an exemplary data structure of a processing server list 1015. The processing server list 1015 database lists processing servers and correlates and holds a processing task 3041, delivery data ID 3042, and a processing server identifier 3043 which is the identifier of a server responsible for processing of the processing task 3041. The service routing computer 1000 refers to the processing server list 1015 database and maps a processing task to the relevant processing server identifier, e.g., "a server that adds a user posted message to data "data0001" is "msg0001".

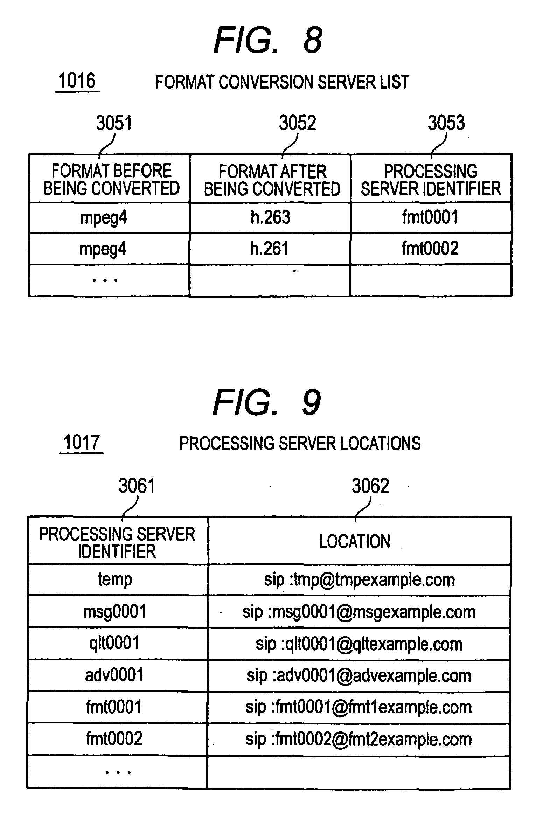

Fig. 8 presents an exemplary data structure of a format conversion server list 1016. The format conversion server list 1016 database correlates and holds a format before being converted 3051 indicating the type of a data format before format conversion, a format after being converted 3052 indicating the type of a data format after format conversion, and a processing server identifier 3053 responsible for processing to convert data of the format before being converted 3051 into data of the format after being converted 3052. The service routing computer 1000 refers to the format conversion server list 1016 database and obtains information, e.g., that "a processing server to convert streaming data encoded in mpeg4 into data of h.263 is the processing server with the "fmt0001" identifier".

Fig. 9 presents an exemplary data structure of processing server locations 1017. The processing server locations 1017 database holds location information (address) of each processing server. It correlates and holds a processing server identifier 3061 of a processing server and its location 3062. The processing server locations 1017 database also holds the location of the server for provisional coupling 1070, correlated to a value of "temp" in the processing server identifier 3061 column. As a concrete example, the first row of the processing server locations 1017 database represents that "the location of the server for provisional coupling 1070 is "sip:tmp@tmpexample.com"". Further description about the server for provisional coupling 1070 will be provided later.

An example of a general operation of the streaming data delivery service system is described. The service provider delivers streaming data via the NGN 1090, using the streaming data delivery device 1030. The service provider opens a portal site for accepting a request for streaming data delivery on the Internet 1091 through the user of the portal server 1110.

In addition, as a policy for streaming data delivery, the service provider is assumed to have set a delivery policy that "is neither to limit the quality, nor to add an advertisement, when delivering delivery data ID "data0001" to a charged user". Concretely, a record in the third row of the delivery policy 1014 database of Fig. 6 corresponds to the foregoing policy.

Meanwhile, a charged user (user ID "usr0001") registered as user for receiving the streaming data delivery service is assumed to register his or her preference information that "the user wants to have a user posted message added to streaming data when receiving delivery data "data0001" into the user setting 1012 database maintained on the service routing computer 1000 managed by the service provider. Concretely, a record in the first row of the user setting 1012 database of Fig. 4 corresponds to the foregoing preference information.

The user "usr0001" accesses the portal server 1110 using the user Web terminal 1021, logs into the streaming data delivery service using his or her ID "usr0001", and transmits the identifier of a streaming data item that the user wants to receive and the SIP URI of the user SIP terminal 1020 to receive streaming data. The format of streaming data available to the user SIP terminal 1020 is "h.263" and the format of streaming data with the delivery data ID "data0001" located in the contents database 1031 on the streaming data delivery device 1030 is "mpeg4".

The user "usr0001" receives streaming data processed according to the policy (Fig. 6) of the service provider, the preference (Fig. 4) set by the user, and the format available to the user SIP terminal 1020. Concretely, the user "usr0001" receives the "data0001" streaming data converted into the h.263 format at the user SIP terminal 1020. As for the thus received streaming data, the quality is not limited, no advertisement is presented with it, and a user posted message is added to it.

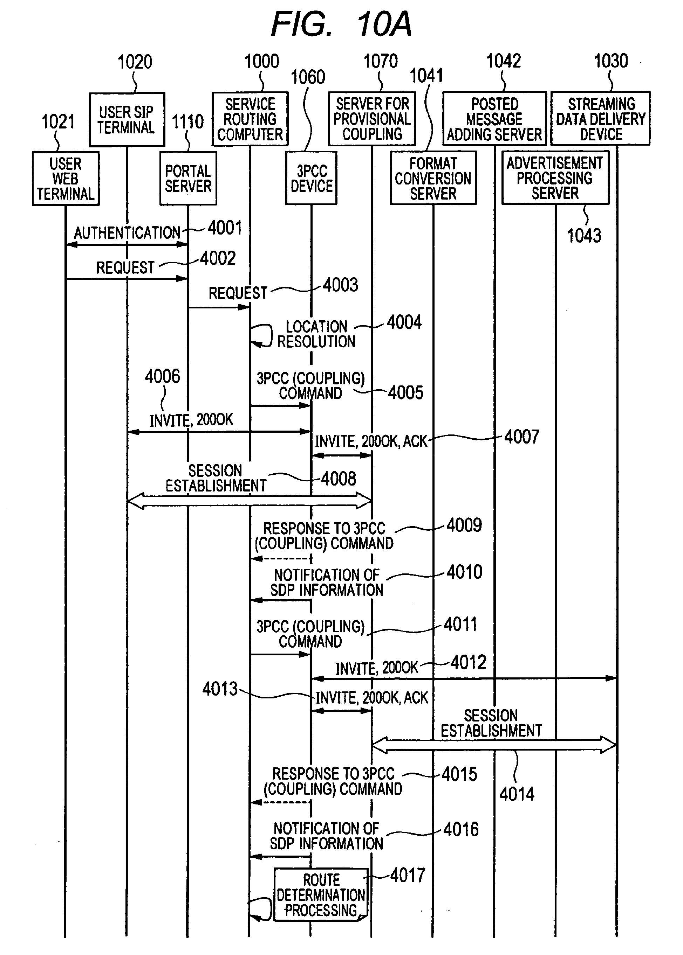

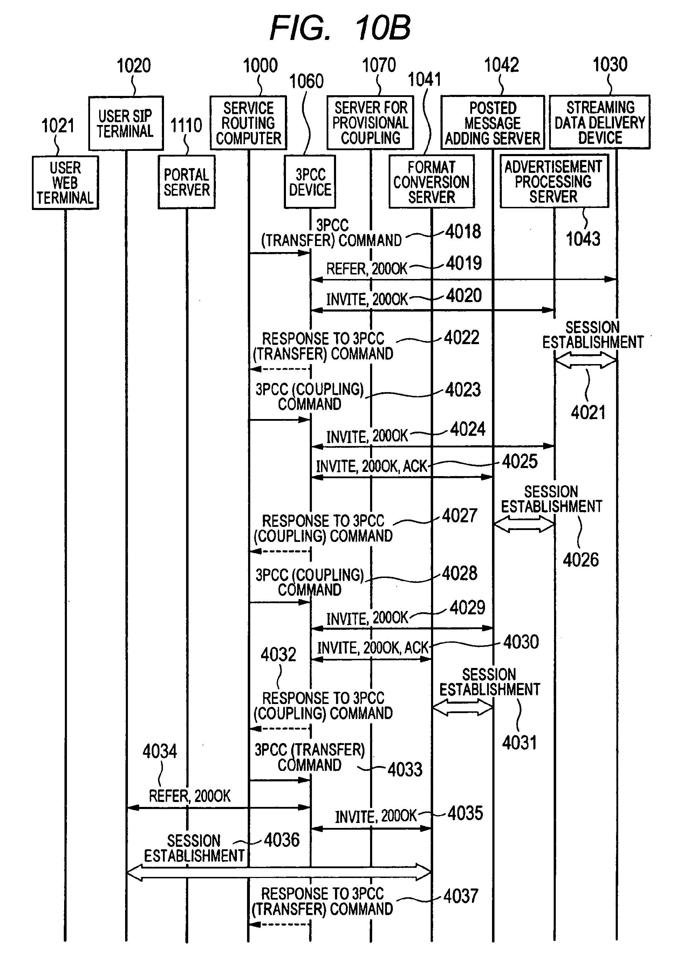

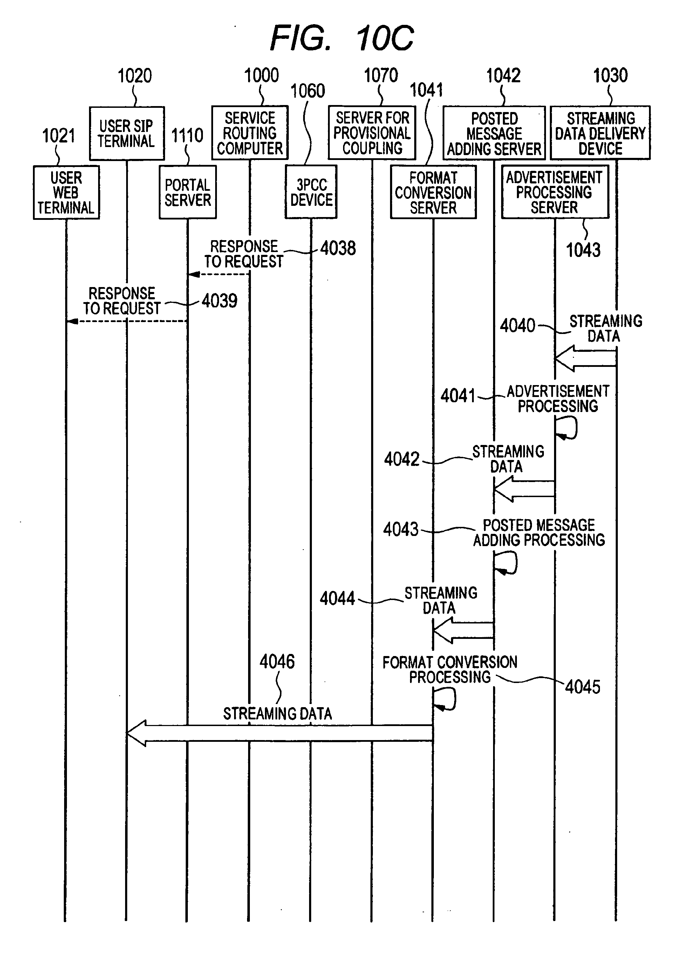

The operation of the streaming data delivery service system, as above, is explained in accordance with a series of sequences illustrated in Figs. 10A through 10C.

### Sequence number 4001 (Authentication):

The user accesses the portal server 1110 from the user Web terminal 1021, transmits the user ID "usr0001", and has user authenticated. The user authentication may, for example, comply with HTTP digest authentication or the like which is normally used in Web.

### Sequence number 4002 (Request):

Using an HTTP request method, the user Web terminal 1021 transmits to the portal server 1110 the following: the authenticated user ID "usr0001"; "data0001" as the identifier (delivery data ID) of streaming data that the user wants to receive; and SIP URI "sip:usr@usr-example.ne.jp" of the SIP terminal 1020 to receive streaming data.

### Sequence number 4003 (Request):

Using the HTTP request method, the portal server 1110 transmits to the service routing computer 1000 the received user ID "usr0001", delivery data ID "data0001", and SIP URI "sip:usr@usr-example.ne.jp" of the user SIP terminal 1020.

### Sequence number 4004 (Location resolution):

The service routing computer 1000 refers to the delivery data list 1013 database and a row having "data0001" in the column of delivery data ID 3021 and obtains the location "sip:datal@serverlexample.com" of the delivery data. The service routing computer 1000 refers to the processing server locations 1017 database and a row having "temp" as a value in the column of processing server identifier 3061 and obtains the location "sip.tmp@tmpexample.com" of the server for provisional coupling 1070.

### Sequence number 4005 (3PCC (coupling) command):

Steps from sequence number 4005 (3PCC (coupling) command) to sequence number 4010 (notification of SDP information) are a process for establishing a session between the user SIP terminal 1020 and the server for provisional coupling 1070, thus allowing the service routing computer 1000 to obtain a format available to the user SIP terminal 1020.

The service routing computer 1000 transmits to the 3PCC device 1060 a session establishment command (makeCallSession request) to establish a session between the user SIP terminal 1020 and the server for provisional coupling 1070. Arguments specified in the makeCallSession request are the SIP URI "sip:usr@usr-example.ne.jp" of the user SIP terminal 1020 and the SIP URI "sip.tmp@tmpexample.com" of the server for provisional coupling 1070.

### Sequence number 4006 (INVITE, 2000K):

A process from sequence number 4006 (INVITE, 2000K) to sequence number 4008 (session establishment) is compliant with a typical 3PCC message sequence which is described in, inter alia, RFC3725 ("Best Current Practices for Third Party Call Control in the Session Initiation Protocol", http://www.rfc- editor.org/rfc/rcf3725.txt).

The 3PCC device 1060 transmits an INVITE message having no SDP to the user SIP terminal 1020. According to the operation of an SDP offer/answer model, the user SIP terminal 1020 returns a 2000K message storing SDP in its body part to the 3PCC device 1060 (SDP offer). In a media description filed of the SDP, information is described to indicate that the h.263 format is available. Thereby, the 3PCC device 1060 obtains the format available to the user SIP terminal 1020.

### Sequence number 4007 (INVITE, 2000K, ACK):

The 3PCC device 1060 transmits to the server for provisional coupling 1070 an INVITE message including the SDP received from the user SIP terminal 1020 as an SDP offer in its body part. The server for provisional coupling 1070 returns a 2000K message to the 3PCC device 1060. In the body part of the 2000K message, SDP indicating that the server can establish coupling is stored (SDP answer). The server for provisional coupling 1070 transmits an ACK message to the 3PCC device 1060.

### Sequence number 4008 (Session establishment):

The 3PCC device 1060 transmits an ACK message to the user SIP terminal 1020. In the body part of the ACK message, the SDP answer received from the server for provisional coupling 1070 is stored.

By way of the foregoing sequence of sequence number 4006 (INVITE, 2000K) and sequence number 4007 (INVITE, 2000K, ACK), coupling is established between the server for provisional coupling 1070 and the user SIP terminal 1020.

### Sequence number 4009 (Response to 3PCC (coupling) command):

The 3PCC device 1060 transmits to the service routing computer 1000 a response (the session number of the session established at sequence number 4008 (session establishment)) to the makeCallSession request at sequence number 4005 (3PCC (coupling) command).

### Sequence number 4010 (Notification of SDP information):

Using SOAP/HTTP messaging, the 3PCC device 1060 transmits the SDP obtained at sequence number 4006 (INVITE, 2000K) to the service routing computer 1000.

By way of the foregoing process from sequence number 4005 (3PCC (coupling) command) to 4010 (notification of SDP information), the service routing computer 1000 obtains the format available to the user SIP terminal 1020.

However, if the NGN 1090 is a network that conforms to a specification that does not permit transmission of an INVITE message having no SDP, it is impossible to perform the foregoing process from sequence number 4005 (3PCC (coupling) command) to 4010 (notification of SDP information) and, therefore, the format available to the SIP terminal 1020 cannot be obtained. In this case, the service routing computer 1000 may obtain the format available to the SIP terminal 1020, for example, in such a manner in which the format available to the SIP terminal 1020 is included in the request message at sequence number 4002 (request) or in which the user registers beforehand the format available to the SIP terminal 1020 in the user setting 1012 database and the service routing computer 1000 refers to the user setting 1012 database also at sequence number 4004 (location resolution).

### Sequence number 4011 (3PCC (coupling) command):

Steps from sequence number 4011 (3PCC (coupling) command) to 4016 (notification of SDP information) are a process for establishing a session between the streaming data delivery device 1030 and the server for provisional coupling 1070, thus allowing the service routing computer 1000 to obtain the format of streaming data that the streaming data delivery device 1030 delivers.

The service routing computer 1000 transmits to the 3PCC device 1060 a session establishment command (makeCallSession request, if the Parlay X interface is used) to establish a session between the streaming data delivery device 1030 and the server for provisional coupling 1070. Arguments specified in the session establishment request are the location "sip:data0001@serverlexample.ne.jp" of data that the streaming data delivery device 1030 delivers and the SIP URI "sip.tmp@tmpexample.com" of the server for provisional coupling 1070.

### Sequence number 4012 (INVITE, 2000K):

A process from sequence number 4012 (INVITE, 2000K) to sequence number 4014 (session establishment) is compliant with a typical 3PCC message sequence which is described in, inter alia, RFC3725.

The 3PCC device 1060 transmits an INVITE message having no SDP to the streaming data delivery device 1030. According to the operation of the SDP offer/answer model, the streaming data delivery device 1030 returns a 2000K message storing SDP in its body part to the 3PCC device 1060 (SDP offer). In a media description filed of the SDP, information is described to indicate that mpeg4, the format of data "data1" is available. Thereby , the 3PCC device 1060 obtains the format of the delivery data "data1".

### Sequence number 4013 (INVITE, 2000K, ACK):

The 3PCC device 1060 transmits to the server for provisional coupling 1070 an INVITE message including the SDP received from the streaming data delivery device 1030 at sequence number 4012 (INVITE, 2000K) as an SDP offer in its body part. The server for provisional coupling 1070 returns a 2000K message to the 3PCC device 1060. In the body part of the 2000K message, SDP indicating that the server can establish coupling is stored (SDP answer). The server for provisional coupling 1070 transmits an ACK message to the 3PCC device 1060.

### Sequence number 4014 (Session establishment):

The 3PCC device 1060 transmits an ACK message to the streaming data delivery device 1030. In the body part of the ACK message, the SDP answer received from the server for provisional coupling 1070 at sequence number 4013 (INVITE, 2000K, ACK) is stored.

By way of the sequence of sequence number 4012 (INVITE, 2000K) and sequence number 4013 (INVITE, 2000K, ACK), coupling is established between the server for provisional coupling 1070 and the streaming data delivery device 1030.

### Sequence number 4015 (Response to 3PCC (connection) command):

The 3PCC device 1060 transmits to the service routing computer 1000 a response (the session number of the session established at sequence number 4014 (session establishment)) to the coupling command at sequence number 4011 (3PCC (coupling) command).

### Sequence number 4016 (Notification of SDP information):

Using SOAP/HTTP messaging, the 3PCC device 1060 transmits the SDP obtained at sequence number 4012 (INVITE, 2000K) to the service routing computer 1000.

By way of the foregoing process from sequence number 4011 (3PCC (coupling) command) to 4016 (notification of SDP information), the service routing computer 1000 obtains the format of streaming data that the streaming data delivery device 1030 delivers.

However, if the NGN 1090 is a network that conforms to a specification that does not permit transmission of an INVITE message having no SDP, it is impossible to perform the foregoing process from sequence number 4011 (3PCC (coupling) command) to 4016 (notification of SDP information) and, therefore, the format of streaming data that the streaming data delivery device 1030 delivers cannot be obtained. In this case, the service routing computer 1000 may obtain the format of streaming data for delivery, for example, in such a manner in which the format of each item of streaming data is registered beforehand in the delivery data list 1013 database and the service routing computer 1000 refers to the delivery data list 1013 database also at sequence number 4004 (location resolution).

### Sequence number 4017 (Route determination processing):

The service routing computer determines a service route which becomes necessary for processing streaming data and providing that data to the user, according to the policy of the service provider, the preference set by the user, the format available to the user SIP terminal, and the format of streaming data to be delivered to the user. Details about this processing will be described later.

As the result of this processing, the sessions are established between:
- the streaming data delivery device 1030 and the advertisement processing server 1043;
- the advertisement processing server 1043 and the posted message adding server 1042;
- the posted message adding server 1042 and the format conversion server 1041; and
- the format conversion server 1041 and the user SIP terminal 1020.

Moreover, the following are obtained:
- SIP URI "sip:adv0001@advexample.com" of the advertisement processing server 1043;
- SIP URI "sip:msg0001@msgexample.com" of the posted message adding server 1042; and
- SIP URI "sip:fmt0001@fmtexample.com" of the format conversion server 1041.

Steps from sequence number 4018 (3PCC (transfer) command) to sequence number 4039 (response to request) are a process for performing service routing along the determined service route (establishing sessions between each server in a series of servers via which the streaming data to be delivered to the user SIP terminal 1020 is forwarded.

### Sequence number 4018 (3PCC (transfer) command):

Steps from sequence number 4018 (3PCC (transfer) command) to sequence number 4022 (response to 3PCC (transfer) command) are a process for transferring the already established session between the streaming data delivery device 1030 and the server for provisional coupling 1070 and establishing a session between the streaming data delivery device 1030 and the advertisement processing server 1043.

A transfer command (REFER message) is used for processing which will be described later. However, if the NGN 1090 is a network that conforms to a specification that does not permit transmission of a REFER message, it is impossible to perform the process, which will be described later, from sequence number 4018 (3PCC (transfer) command) to sequence number 4022 (response to 3PCC (transfer) command). In this case, for example, in the processing at sequence number 4018, instead of a 3PCC (transfer) command, a session establishment command (PCC (coupling) command) may be transmitted to establish a session between the server for provisional coupling 1070 and the advertisement processing server 1043, so that the session between them is established. By linking and using two sessions, namely, the session from the streaming data delivery device 1030 to the server for provisional coupling 1070 and the session from the server for provisional coupling 1070 to the advertisement processing server 1043, the same result can be obtained as establishing a session between the streaming data delivery device 1030 and the advertisement processing server 1043 by the transfer command, which will be described later.

At sequence number 4018 (3PCC (transfer) command), the service routing computer 1000 transmits to the 3PCC device 1060 a transfer command (e.g., a transferCallParticipant request, if the Parlay X interface is used) that is directed toward the streaming data delivery device 1030. Arguments specified in the transfer command are the session number obtained at sequence number 4015 (response to 3PCC (coupling) command), the location "sip:datal@serverlexample.ne.jp" of data to be delivered by the streaming data delivery device 1030, and the SIP URI "sip:adv0001@advexample.com" of the advertisement processing server 1043 which is the destination of the transfer (in the case where the above transferCallParticipant request of Parlay X is used, the SIP URI of the advertisement processing server 1043 which is the destination of the transfer is stored in a string form in a field for an argument of destinationCallSesssionIdentifier and the 3PCC device 1060 having received the request parses it properly (that is, treats it as the SIP URI of the destination of the transfer); thereby, the processing which will be described later is implemented).

### Sequence number 4019 (REFER, 2000K):

The 3PCC device 1060 transmits to the streaming data delivery device 1030 a transfer command (REFER message) for transfer to the advertisement processing server 1043. In the REFER message, both SIP URIs received at sequence number 4018 (3PCC (transfer) command) are replicated. The streaming data delivery device 1030 transmits a 2000K message as a response to the received REFER message to the 3PCC device 1060.

### Sequence number 4020 (INVITE, 2000K):

The 3PCC device 1060 transmits an INVITE message to establish a session with the streaming data delivery device 1030 to the advertisement processing server 1043. The advertisement processing server 1043 returns a 2000K message as a response to the received INVITE message to the 3PCC device 1060.

### Sequence number 4021 (Session establishment):

The 3PCC device 1060 transmits an ACK message to the advertisement processing server 1043.

By way of the foregoing sequence of sequence number 4019 (REFER, 2000K) and sequence number 4020 (INVITE, 2000K), the destination of coupling of the streaming data delivery device 1030 is changed (the session is transferred) to the advertisement processing server 1043.

### Sequence number 4022 (Response to 3PCC (transfer) command):

The 3PCC device 1060 returns to the service routing computer 1000 a response to the transfer command received at sequence number 4018 (3PCC (transfer) command) (in the case where transferCallParticipant of Parlay X is used, a response is void and, hence, no response message is needed).

### Sequence number 4023 (3PCC (coupling) command):

Steps from sequence number 4023 (3PCC (coupling) command) to sequence number 4027 (response to 3PCC (coupling) command) are a process for establishing coupling between the advertisement processing server 1043 and the posted message adding server 1042.

The service routing computer 1000 transmits to the 3PCC device 1060 a session establishment command to establish a session between the advertisement processing server 1043 and the posted message adding server 1042. Arguments specified in the session establishment command are the SIP URI "sip:adv0001@advexample.ne.jp" of the advertisement processing server 1043 and the SIP URI "sip:msg0001@msgexample.com" of the posted message adding server 1042.

### Sequence number 4024 (INVITE, 2000K):

A process from sequence number 4024 (INVITE, 2000K) to sequence number 4026 (session establishment) is compliant with a typical 3PCC message sequence which is described in, inter alia, RFC3725.

### The 3PCC device 1060 transmits an INVITE message to the advertisement processing server 1043. The advertisement processing server 1043 returns a 2000K message to the 3PCC device 1060.

### Sequence number 4025 (INVITE, 2000K, ACK):

The 3PCC device 1060 transmits an INVITE message to the posted message adding server 1042. The posted message adding server 1042 returns a 2000K message to the 3PCC device 1060. The server for provisional coupling 1070 transmits an ACK message to the 3PCC device 1060.

### Sequence number 4026 (Session establishment):

The 3PCC device 1060 transmits an ACK message to the advertisement processing server 1043.

By way of the foregoing sequence of sequence number 4024 (INVITE, 2000K) and sequence number 4025 (INVITE, 2000K, ACK), coupling is established between the posted message adding server 1042 and the advertisement processing server 1043.

### Sequence number 4027 (Response to 3PCC (coupling) command):

The 3PCC device 1060 transmits to the service routing computer 1000 a response (the session number of the session established at sequence number 4026 (session establishment)) to the coupling command received at sequence number 4022 (3PCC (coupling) command).

### Sequence number 4028 (3PCC (coupling) command):

Steps from sequence number 4028 (3PCC (coupling) command) to sequence number 4032 (response to 3PCC (coupling) command) are a process for establishing coupling between the posted message adding server 1042 and the format conversion server 1041.

The service routing computer 1000 transmits to the 3PCC device 1060 a session establishment command to establish a session between the posted message adding server 1042 and the format conversion server 1041. Arguments specified in the session establishment command are the SIP URI "sip:msg0001@msgexample.com" of the posted message adding server 1042 and the SIP URI "sip:fmt0001@fmt1.example.com" of the format conversion server 1041.

### Sequence number 4029 (INVITE, 2000K):

A process from sequence number 4029 (INVITE, 2000K) to sequence number 4031 (session establishment) is compliant with a typical 3PCC message sequence which is described in, inter alia, RFC3725.

The 3PCC device 1060 transmits an INVITE message to the posted message adding server 1042.

Then, the posted message adding server 1042 returns a 2000K message to the 3PCC device 1060.

### Sequence number 4030 (INVITE, 2000K, ACK):

The 3PCC device 1060 transmits an INVITE message to the format conversion server 1041. Then, the format conversion server 1041 returns a 2000K message to the 3PCC device 1060. Then, the format conversion server 1041 transmits an ACK message to the 3PCC device 1060.

### Sequence number 4031 (Session establishment):

The 3PCC device 1060 transmits an ACK message to the posted message adding server 1042.

### By way of the foregoing sequence of sequence number 4029 (INVITE, 2000K) and sequence number 4030 (INVITE, 2000K, ACK), coupling is established between the format conversion server 1041 and the posted message adding server 1042.

### Sequence number 4032 (Response to 3PCC (coupling) command):

The 3PCC device 1060 transmits to the service routing computer 1000 a response (the session number of the session established at sequence number 4031 (session establishment)) to the coupling command received at sequence number 4028 (3PCC (coupling) command).

### Sequence number 4033 (3PCC (transfer) command):

Steps from sequence number 4033 (3PCC (transfer) command) to sequence number 4037 (response to 3PCC (transfer) command) are a process for transferring the user SIP terminal 1020 that established the session with the server for provisional coupling 1070 to the format conversion server 1041.

As is the case for the process from sequence number 4018 (3PCC (transfer) command) to sequence number 4022 (response to 3PCC (transfer) command), a transfer command (REFER message) is used for processing which will be described later. However, if the NGN 1090 is a network that conforms to a specification that does not permit transmission of a REFER message, it is impossible to perform the process, which will be described later, from sequence number 4033 (3PCC (transfer) command) to sequence number 4037 (response to 3PCC (transfer) command).

As is the case for the process from sequence number 4018 (3PCC (transfer) command) to sequence number 4022 (response to 3PCC (transfer) command), again, for example, in the processing at sequence number 4033, instead of a 3PCC (transfer) command, a session establishment command (PCC (coupling) command) may be transmitted to establish a session between the server for provisional coupling 1070 and the format conversion server 1041, so that the session between them is established. By linking and using two sessions, namely, the session from the format conversion server 1041 to the server for provisional coupling 1070 and the session from the server for provisional coupling 1070 to the user SIP terminal 1020, the same result can be obtained as establishing a session between the format conversion server 1041 and the user SIP terminal 1020 by the transfer command, which will be described later.

At sequence number 4033 (3PCC (transfer) command), the service routing computer 1000 transmits to the 3PCC device 1060 a transfer command (e.g., a transferCallParticipant request, if the Parlay X interface is used) that is directed toward the user SIP terminal 1020. Arguments specified in the transfer command are the session number obtained at sequence number 4009 (response to 3PCC (coupling) command), the SIP URI "sip:usr@usr- example.ne.jp" of the user SIP terminal 1020, and the SIP URI "sip:fmt0001@fmtexample.com" of the format conversion server 1041 which is the destination of the transfer.

### Sequence number 4034 (REFER, 2000K):

The 3PCC device 1060 transmits to the user SIP terminal 1020 a transfer command (REFER message) for transfer to the format conversion server 1041. In the REFER message, both SIP URIs received at sequence number 4033 (3PCC (transfer) command) are replicated. The user SIP terminal 1020 transmits a 2000K message as a response to the received REFER message to the 3PCC device 1060.

### Sequence number 4035 (INVITE, 2000K):

The 3PCC device 1060 transmits to the format conversion server 1041 an INVITE message to establish a session with the user SIP terminal 1020. The format conversion server 1041 returns a 200 OK message as a response to the received INVITE message to the 3PCC device 1060.

### Sequence number 4036 (Session establishment):

The 3PCC device 1060 transmits an ACK message to the format conversion server 1041.

By way of the foregoing sequence of sequence number 4034(REFER, 2000K) and sequence number 4035 (INVITE, 2000K), the destination of coupling of the user SIP terminal 1020 is changed (the session is transferred) to the format conversion server 1041.

### Sequence number 4037 (Response to 3PCC (transfer) command):

The 3PCC device 1060 returns to the service routing computer 1000 a response to the transfer command received at sequence number 4033 (3PCC (transfer) command) (in the case where transferCallParticipant of Parlay X is used, a response is void and, hence, no response message is needed).

By way of the foregoing process from sequence number 4018 (3PCC (transfer) command) to sequence number 4037 (response to 3PCC (transfer) command), service routing for the service route obtained by sequence number 4017 (route determination processing) is completed.

### Sequence number 4038 (Response to request):

The service routing computer 1000 transmits to the portal server 1110 a message indicating that routing has been completed normally as a response to the request received at sequence number 4003 (request).

### Sequence number 4039 (Response to request):

The portal server 1110 transmits to the user Web terminal 1021 a message indicating that it accepted the service request normally as a response to the request received at sequence number 4002 (request).

### Sequence number 4040 (Streaming data):

A process from sequence number 4040 (streaming data) to sequence number 4046 (streaming data) is the process for delivering streaming data via the sessions established before this point of time.

At sequence number 4040 (streaming data), the streaming data delivery device 1030 transmits streaming data 0001 to the advertisement processing server 1043 via the session established at sequence number 4021 (session establishment).

In the sequence of the present embodiment, sequence number 4040 (streaming data) starts after the completion of sequence number 4039 (response to request). In practice, however, transmission of streaming data need not wait for the completion of sequence number 4039 (response to request) and may be initiated at any timing after the session is established at sequence number 4021 (session establishment). In that case, the advertisement processing server 1043 caches data received at sequence number 4040 (streaming data) until the completion of sequence number 4026 (session establishment).

### Sequence number 4041 (Advertisement processing):

The advertisement processing server 1043 adds advertisement information to streaming data received at sequence number 4040 (streaming data).

### Sequence number 4042 (Streaming data):

The advertisement processing server 1043 transmits streaming data processed at sequence number 4041 (advertisement processing) to the posted message adding server 1042 via the session established at sequence number 4026 (session establishment).

### Sequence number 4043 (Posted message adding processing):

The posted message adding server 1042 adds information posted by a user of the service to streaming data received at sequence number 4042 (streaming data).

### Sequence number 4044 (Streaming data):

The posted message adding server 1042 transmits streaming data processed at sequence number 4043 (posted message adding processing) to the format conversion server 1041 via the session established at sequence number 4031 (session establishment).

### Sequence number 4045 (Format conversion processing):

The format conversion server 1041 converts the format of streaming data received at sequence number 4044 (streaming data) from mpeg4 to h.263.

### Sequence number 4046 (Streaming data):

The format conversion server 1041 transmits streaming data processed at sequence number 4045 (format conversion processing) to the user SIP terminal 1020 via the session established at sequence number 4036 (session establishment).

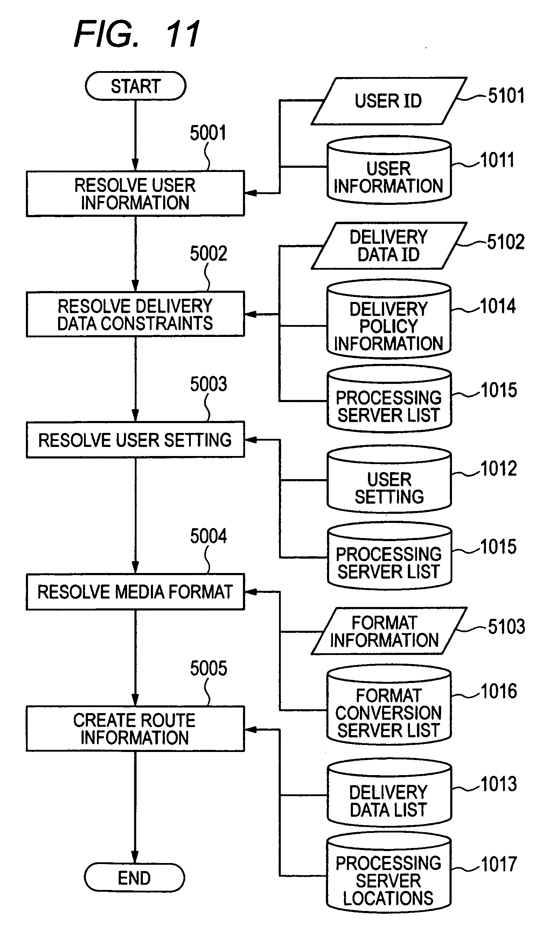

Fig. 11 presents a processing flow by which the service routing computer 1000 determines a service route at sequence number 4017 (route determination processing).

### Step 5001 (Resolving user information):

The service routing computer 1000 refers to the user information 1011 database, using user ID 5101 included in the request message received at sequence number 4003 (request), and obtains user charging information 3002.

In the illustrative example of the present embodiment, the service routing computer 1000 can obtain charging information "1" for user ID "usr0001"; that is, meaning that the user is a "charge-free ID registrant user".

### Step 5002 (Resolving delivery data constraints):

The service routing computer 1000 refers to the delivery policy 1014 database, using delivery data ID 5102 included in the request message received at sequence number 4003 (request) and the user charging information obtained at step 5001 (resolving user information), and obtains information as to whether or not to limit quality and to present advertisement. Using the thus obtained information and the delivery data ID 5102, the service routing computer 1000 refers to the processing server list 1015 database and obtains the identifier of a processing server via which the streaming data is to be forwarded by service routing.

In the illustrative example of the present embodiment, since the delivery data ID 5102 is "data0001" and the user charging information is "1", the service routing computer 1000 obtains a delivery policy not to limit quality and to present advertisement. Further, referring to the processing server list 1015 database, the service routing computer 1000 obtains "adv0001" as the identifier of a processing server via which the streaming data is to be forwarded.

### Step 5003 (Resolving user setting):

The service routing computer 1000 refers to the user setting 1012 database, using the user ID 1501 and delivery data ID 5102 included in the request message received at sequence number 4003 (request), and obtains information as to whether or not to add a user posted message. Using the thus obtained information and the delivery data ID 5102, the service routing computer 1000 refers to the processing server list 1015 database and obtains the identifier of a processing server via which the streaming data is to be forwarded by service routing.

In the illustrative example of the present embodiment, since the user ID 5101 is "usr0001" and the delivery data ID 5102 is "data0001", the service routing computer 1000 can obtain user preference information that the user wants to have a user posted message added to the streaming data to be delivered. Further, referring to the processing server list 1015 database, the service routing computer 1000 obtains "msg0001" as the identifier of a processing server via which the streaming data is to be forwarded.

### Step 5004 (Resolving media format):

The service routing computer 1000 refers to the format conversion server list 1016 database, using the format 1503 available to the user SIP terminal 1020 obtained at sequence number 4010 (notification of SDP information) and the format 1503 of streaming data for delivery obtained at sequence number 4016 (notification of SDP information), and obtains the identifier of a format conversion server 1041 to convert the format of the streaming data for delivery into the format available to the user SIP terminal 1020.

In the illustrative example of the present embodiment, since the format of the streaming data for delivery (with the delivery data ID 1502 of "data0001") is "mpeg4" and the format available to the user SIP terminal 1020 is "h.263", the service routing computer 1000 obtains "fmt0001" as the identifier of the format conversion server 1041.

### Step 5005 (Creating route information):

The service routing computer 1000 determines information (a route) for service routing by using the processing results from step 5001 (resolving user information) to step 5004 (resolving media format), the delivery data list 1013 database, and the processing server locations 1017 database.

In the present embodiment, the system components or servers along the determined route are to be coupled one another statically in the following order: streaming data delivery device 1030; advertisement processing server 1043; posted message adding server 1042; quality limiting server, format conversion server 1041, user SIP terminal 1020 (among them, one system component (or server) couples to the next one in this order, but skipping a server of a type via which steaming data does not need to be forwarded).

Thus, in the illustrative example of the present embodiment, first, "the streaming data delivery device 1030 couples to the advertisement processing server 1043 "adv0001"" and, in turn, "the advertisement processing server 1043"adv0001" couples to the posted message adding server 1042"msg0001"", "the posted message adding server 1042"msg0001" couples to the format conversion server 1041"fmt0001"", and "the format conversion server 1041"fmt0001" couples to the user SIP terminal 1020". And, reference to the locations yields results that "the advertisement processing server 1043 is "sip:adv0001@advexample.com", the posted message adding server 1042 is "sip:msg0001@msgexample.com", and the format conversion server 1041 is "sip:fmt0001@fmtexample.com".

In the foregoing process, it is not necessarily the case that the order of the couplings along the route is determined statically. For example, dependence relations between processing servers, that is, "processing that is performed by one processing server (identifier) need to be performed before processing that is performed by another processing server (identifier)" may separately be retained as a matrix in a database. It is also possible to use a manner of determining the order of the couplings so as to satisfy such dependence relations.

According to the present embodiment described in the previous paragraphs, it is possible to curtail the procedure until a session is established between the delivery server and the user terminal.

Determining a service route and routing for processing according to data delivery policy, user preference, and available format can be implemented. It becomes possible to give an added value to data to be delivered to users.

It also becomes possible to add business advertisement to data efficiently according to the contents of the data to be provided to users; this is beneficial for the service provider.

Further, for example, a streaming data processing server that adds user ID and a time stamp when the service is provided, as digital watermark data, to streaming data, may join a service route; this can produce an effect of content protection.

A standard protocol, an SIP is used as is for building the streaming data delivery system service in the present embodiment. Thus, it is not necessary to modify existing SIP servers and SIP clients. This is also advantageous, as it is possible to reduce the cost for developing the interfaces for service routing.

The embodiment described hereinbefore is only exemplary and is not intended to limit the present invention to the foregoing embodiment.

The specification and drawings are, accordingly, to be regarded in an illustrative rather than a restrictive sense. It will, however, be evident that various modifications and changes may be made thereto without departing from the scope of the invention(s) as set forth in the claims.

## Claims

1. A streaming data delivery system comprising:
a streaming data delivery device (1030) using a SIP Session Initiation Protocol;
a server for provisional coupling (1070) using an SIP;
a plurality of format conversion servers (1041) using an SIP which perform format conversion of streaming data;
a user terminal (1020) using an SIP;
a 3PCC Third Party Call Control device (1060) which implements SIP Third Party Call Control; and
a service routing computer (1000) which is configured to transmit a command to establish a session between the streaming data delivery device (1030) and the user terminal (1020),
the 3PCC device (1060), which is configured to receive the command to establish the session, including:
means for obtaining information about a first format available to the user terminal from the user terminal (1020) and establishing a session between the user terminal (1020) and the server for provisional coupling (1070);
means for obtaining information about a second format of streaming data that the streaming data delivery device (1030) delivers from the streaming data delivery device (1030) and establishing a session between the streaming data delivery device (1030) and the server for provisional coupling (1070);
means for selecting a format conversion server (1041) that converts the second format of the streaming data into the first format from the plurality of format conversion servers (1041);
means for transferring the session between the streaming data delivery device (1030) and the server for provisional coupling (1070) into a session between the streaming data delivery device (1030) and the selected format conversion server (1041); and
means for transferring the session between the user terminal (1020) and the server for provisional coupling (1070) into a session between the user terminal (1020) and the selected format conversion server (1041).

2. The streaming data delivery system according to claim 1,
wherein the service routing computer (1000) includes a user attribute information database which is configured to store user attribute information for each user who uses the user terminal (1020), a delivery policy database which is configured to store a correlation between an identifier of an item of the streaming data and the user attribute information as a delivery policy (1014), and a processing server list (1015) which is configured to correlate and store a processing task (3041) to be performed for the streaming data according to the delivery policy (1014) and an identifier of a processing server (1041, 1042, 1043) that is configured to perform the processing task (3041), and further includes means for referring to the delivery policy database based on the user attribute information from the user attribute information database and identifying a processing server (1041, 1042, 1043) that is to perform a processing task (3041) to be performed for the streaming data and means for transmitting a command to establish a session between the streaming data delivery device (1030) and the processing server (1041, 1042, 1043) and a command to establish a session between the processing server and the selected format conversion server (1041) in order to route the streaming data via the identified processing server (1041, 1042, 1043), and
wherein the 3PCC device (1060) includes means for, in response to the command to establish a session between the streaming data delivery device (1030) and the processing server (1041, 1042, 1043), transferring the session between the streaming data delivery device (1030) and the server for provisional coupling (1070) into a session between the streaming data delivery device (1030) and the identified processing server (1041, 1042, 1043), instead of transferring the session between the streaming data delivery device (1030) and the server for provisional coupling (1070) into a session between the streaming data delivery device (1030) and the selected format conversion server (1041), and means for, in response to the command to establish a session between the identified processing server (1041, 1042, 1043) and the selected format conversion server (1041), establishing the session between the identified processing server (1041, 1042, 1043) and the selected format conversion server (1041).

3. The streaming data delivery system according to claim 1 or 2, wherein the service routing computer (1000) is configured to identify a plurality of processing servers (1041, 1042, 1043) dedicated for each type of processing tasks (3041) to be performed for the streaming data and to determine a route of the streaming data toward the plurality of processing servers (1041, 1042, 1043) identified.

4. The streaming data delivery system according to claim 2 or 3, wherein the user attribute is charging information (3002, 3032) for the user with regard to delivery of the streaming data from the streaming data delivery device (1030) and a processing task (3041) to be performed for the streaming data with reference to the delivery policy database based on the user charging information (3002, 3032) is at least either to limit the quality of the streaming data or to present advertisement with the streaming data.

5. The streaming data delivery system according to claim 2 or 3, wherein the user attribute is setting information entered by the user with regard to delivery of the streaming data from the streaming data delivery device (1030) and a processing task (3041) to be performed for the streaming data with reference to the delivery policy database based on the user-entered setting information is to add a user posted message (3013) to the streaming data.

6. A streaming data delivery method for use in a streaming data delivery system including a streaming data delivery device (1030) using a SIP Session Initiation Protocol; a server for provisional coupling (1070) using an SIP; a plurality of format conversion servers (1041) using an SIP which perform format conversion of streaming data; a user terminal (1020) using an SIP; a 3PCC Third Party Call Control device (1060) which implements SIP Third Party Call Control; and a service routing computer (1000) which transmits a command to establish a session between the streaming data delivery device (1030) and the user terminal (1020),
the streaming data delivery method comprising a set of steps that are carried out by the 3PCC device (1060), upon receiving the command to establish the session, the steps including:
obtaining information about a first format available to the user terminal (1020) from the user terminal (1020) and establishing a session between the user terminal (1020) and the server for provisional coupling (1070);
obtaining information about a second format of streaming data that the streaming data delivery device (1030) delivers from the streaming data delivery device (1030) and establishing a session between the streaming data delivery device (1030) and the server for provisional coupling (1070);
selecting a format conversion server (1041) that converts the second format of the streaming data into the first format from the plurality of format conversion servers (1041);
transferring the session between the streaming data delivery device (1030) and the server for provisional coupling (1070) into a session between the streaming data delivery device (1030) and the selected format conversion server (1041); and
transferring the session between the user terminal (1020) and the server for provisional coupling (1070) into a session between the user terminal (1020) and the selected format conversion server (1041).

7. The streaming data delivery method according to claim 6,
wherein the service routing computer (1000) includes a user attribute information database which stores user attribute information for each user who uses the user terminal (1020), a delivery policy database which stores a correlation between an identifier of an item of the streaming data and the user attribute information as a delivery policy (1014), and a processing server list (1015) which correlates and stores a processing task (3041) to be performed for the streaming data according to the delivery policy (1014) and an identifier of a processing server (1041, 1042, 1043) that performs the processing task (3041),
the streaming data delivery method further comprising the following steps that are carried out by the service routing computer (1000):
referring to the delivery policy database based on the user attribute information from the user attribute information database and identifying a processing server (1041, 1042, 1043) that is to perform a processing task (3041) to be performed for the streaming data; and
transmitting a command to establish a session between the streaming data delivery device (1030) and the processing server (1041, 1042, 1043) and a command to establish a session between the processing server (1041, 1042, 1043) and the selected format conversion server (1041) in order to route the streaming data via the identified processing server (1041, 1042, 1043), and
the streaming data delivery method further comprising the following steps that are carried out by the 3PCC device (1060):
in response to the command to establish a session between the streaming data delivery device (1030) and the processing server (1041, 1042, 1043), transferring the session between the streaming data delivery device (1030) and the server for provisional coupling (1070) into a session between the streaming data delivery device (1030) and the identified processing server (1041, 1042, 1043), instead of transferring the session between the streaming data delivery device (1030) and the server for provisional coupling (1070) into a session between the streaming data delivery device (1030) and the selected format conversion server (1041); and in response to the command to establish a session between the identified processing server (1041, 1042, 1043) and the selected format conversion server (1041), establishing the session between the identified processing server (1041, 1042, 1043) and the selected format conversion server (1041).

8. The streaming data delivery method according to claim 6 or 7, wherein the service routing computer (1000) identifies a plurality of processing servers (1041, 1042, 1043) dedicated for each type of processing tasks (3041) to be performed for the streaming data and determines a route of the streaming data toward the plurality of processing servers (1041, 1042, 1043) identified.

9. The streaming data delivery method according to claim 7 or 8, wherein the user attribute is charging information (3002, 3032) for the user with regard to delivery of the streaming data from the streaming data delivery device (1030) and a processing task (3041) to be performed for the streaming data with reference to the delivery policy database based on the user charging information (3002, 3032) is at least either to limit the quality of the streaming data or to present advertisement with the streaming data.

10. The streaming data delivery method according to claim 7 or 8, wherein the user attribute is setting information entered by the user with regard to delivery of the streaming data from the streaming data delivery device (1030) and a processing task (3041) to be performed for the streaming data with reference to the delivery policy database based on the user-entered setting information is to add a user posted message (3013) to the streaming data.

## Patentansprüche

1. Streamingdaten-Zuführungssystem mit:
einer Streamingdaten-Zuführungsvorrichtung (1030), die ein SIP-Sitzungsinitiationsprotokoll verwendet;
einem Server zum provisorischen Koppeln (1070) unter Verwendung eines SIP;
mehreren ein SIP verwendenden Formatumwandlungsservern (1041), die eine Formatumwandlung von Streamingdaten durchführen;
einem Benutzerendgerät (1020), das ein SIP verwendet;
einer 3PCC Drittteilnehmeranruf-Steuervorrichtung (1060), die eine SIP-Drittteilnehmeranruf-Steuerung umsetzt; und
einem Dienstleistungs-Leitweglenkungscomputer (1000), der dazu konfiguriert ist, einen Befehl zu übertragen, um eine Sitzung zwischen der Streamingdaten-Zuführungsvorrichtung (1030) und dem Benutzerendgerät (1020) herzustellen,
der 3PCC-Vorrichtung (1060), die dazu konfiguriert ist, den Befehl zum Herstellen der Sitzung zu empfangen, einschließlich:
einem Mittel zum Erhalten von Information über ein erstes Format, das dem Benutzerendgerät zur Verfügung steht, vom Benutzerendgerät (1020) und Herstellen einer Sitzung zwischen dem Benutzerendgerät (1020) und dem Server zum provisorischen Koppeln (1070);
einem Mittel zum Erhalten von Information über ein zweites Format von Streamingdaten, welche die Streamingdaten-Zuführungsvorrichtung (1030) zuführt, von der Streamingdaten-Zuführungsvorrichtung (1030) und Herstellen einer Sitzung zwischen der Streamingdaten-Zuführungsvorrichtung (1030) und dem Server zum provisorischen Koppeln (1070);
einem Mittel zum Auswählen eines Formatumwandlungsservers (1041), der das zweite Format der Streamingdaten in das erste Format umwandelt, aus den mehreren Formatumwandlungsservern (1041);
einem Mittel zum Übertragen der Sitzung zwischen der Streamingdaten-Zuführungsvorrichtung (1030) und dem Server zum provisorischen Koppeln (1070) zu einer Sitzung zwischen der Streamingdaten-Zuführungsvorrichtung (1030) und dem ausgewählten Formatumwandlungsserver (1041); und
einem Mittel zum Übertragen der Sitzung zwischen dem Benutzerendgerät (1020) und dem Server zum provisorischen Koppeln (1070) zu einer Sitzung zwischen dem Benutzerendgerät (1020) und dem ausgewählten Formatumwandlungsserver (1041).

2. Streamingdaten-Zuführungssystem nach Anspruch 1,
wobei der Dienstleistungs-Leitweglenkungscomputer (1000) eine Benutzerattribut-Informationsdatenbank, welche dazu konfiguriert ist, Benutzerattributinformation für jeden Benutzer zu speichern, der das Benutzerendgerät (1020) benutzt, eine Zuführungsrichtlinien-Datenbank, welche dazu konfiguriert ist, eine Korrelation zwischen einer Kennung eines Elements der Streamingdaten und der Benutzerattributinformation als Zuführungsrichtlinie (1014) zu speichern, und eine Verarbeitungsserverliste (1015) einschließt, welche dazu konfiguriert ist, eine Verarbeitungsaufgabe (3041), die für die Streamingdaten gemäß der Zuführungsrichtlinie (1014) durchzuführen ist, und eine Kennung eines Verarbeitungsservers (1041, 1042, 1043), der dazu konfiguriert ist, die Verarbeitungsaufgabe (3041) durchzuführen, zu korrelieren und zu speichern, und ferner ein Mittel zur Bezugnahme auf die Zuführungsrichtlinien-Datenbank auf der Basis der Benutzerattributinformation von der Benutzerattribut-Informationsdatenbank und zum Identifizieren eines Verarbeitungsservers (1041, 1042, 1043), der eine Verarbeitungsaufgabe (3041) durchführen soll, die für die Streamingdaten durchzuführen ist, und ein Mittel zum Übertragen eines Befehls zum Herstellen einer Sitzung zwischen der Streamingdaten-Zuführungsvorrichtung (1030) und dem Verarbeitungsserver (1041, 1042, 1043) und eines Befehls zum Herstellen einer Sitzung zwischen dem Verarbeitungsserver und dem ausgewählten Formatumwandlungsserver (1041) einschließt, um die Streamingdaten über den identifizierten Verarbeitungsserver (1041, 1042, 1043) zu leiten, und
wobei die 3PCC-Vorrichtung (1060) ein Mittel beinhaltet, um als Antwort auf den Befehl zum Herstellen einer Sitzung zwischen der Streamingdaten-Zuführungsvorrichtung (1030) und dem Verarbeitungsserver (1041, 1042, 1043) die Sitzung zwischen der Streamingdaten-Zuführungsvorrichtung (1030) und dem Server zum provisorischen Koppeln (1070) in eine Sitzung zwischen der Streamingdaten-Zuführungsvorrichtung (1030) und dem identifizierten Verarbeitungsserver (1041, 1042, 1043) zu übertragen, anstelle die Sitzung zwischen der Streamingdaten-Zuführungsvorrichtung (1030) und dem Server zum provisorischen Koppeln (1070) in eine Sitzung zwischen der Streamingdaten-Zuführungsvorrichtung (1030) und dem ausgewählten Formatumwandlungsserver (1041) zu übertragen, und ein Mittel beinhaltet, um als Antwort auf den Befehl zum Herstellen einer Sitzung zwischen dem identifizierten Verarbeitungsserver (1041, 1042, 1043) und dem ausgewählten Formatumwandlungsserver (1041) die Sitzung zwischen dem identifizierten Verarbeitungsserver (1041, 1042, 1043) und dem ausgewählten Formatumwandlungsserver (1041) herzustellen.

3. Streamingdaten-Zuführungssystem nach Anspruch 1 oder 2, wobei der Dienstleistungs-Leitweglenkungscomputer (1000) dazu konfiguriert ist, mehrere Verarbeitungsserver (1041, 1042, 1043) zu identifizieren, die für jede Art von Verarbeitungsaufgaben (3041) bestimmt sind, die für die Streamingdaten durchgeführt werden sollen, und eine Route der Streamingdaten zu den mehreren identifizierten Verarbeitungsservern (1041, 1042, 1043) hin zu bestimmen.

4. Streamingdaten-Zuführungssystem nach Anspruch 2 oder 3, wobei das Benutzerattribut Information (3002, 3032) für den Benutzer hinsichtlich der Zuführung der Streamingdaten von der Streamingdaten-Zuführungsvorrichtung (1030) abrechnet und eine Verarbeitungsaufgabe (3041), die für die Streamingdaten in Bezug auf die Zuführungsrichtlinien-Datenbank auf der Basis der Benutzerabrechnungsinformation (3002, 3032) durchgeführt werden soll, darin besteht, zumindest entweder die Qualität der Streamingdaten zu begrenzen oder Werbung mit den Streamingdaten zu präsentieren.

5. Streamingdaten-Zuführungssystem nach Anspruch 2 oder 3, wobei das Benutzerattribut Information einstellt, die von dem Benutzer in Bezug auf die Zuführung der Streamingdaten von der Streamingdaten-Zuführungsvorrichtung (1030) eingegeben wird, und eine Verarbeitungsaufgabe (3041), die für die Streamingdaten in Bezug auf die Zuführungsrichtlinien-Datenbank auf der Basis der vom Benutzer eingegebenen Einstellinformation durchgeführt werden soll, darin besteht, eine vom Benutzer aufgegebene Nachricht (3013) an die Streamingdaten anzufügen.

6. Streamingdaten-Zuführungsverfahren zur Verwendung in einem Streamingdaten-Zuführungssystem, welches eine Streamingdaten-Zuführungsvorrichtung (1030), die ein SIP-Sitzungsinitiationsprotokoll verwendet; einen Server zum provisorischen Koppeln (1070) unter Verwendung eines SIP; mehrere Formatumwandlungsservern (1041), die ein SIP verwenden, die eine Formatumwandlung von Streamingdaten durchführen; ein Benutzerendgerät (1020), das ein SIP verwendet; eine 3PCC Drittteilnehmeranruf-Steuervorrichtung (1060), die eine SIP-Drittteilnehmeranruf-Steuerung umsetzt; und einen Dienstleistungs-Leitweglenkungscomputer (1000) einschließt, der einen Befehl überträgt, um eine Sitzung zwischen der Streamingdaten-Zuführungsvorrichtung (1030) und dem Benutzerendgerät (1020) herzustellen,
wobei das Streamingdaten-Zuführungsverfahren einen Satz Schritte umfasst, die von der 3PCC-Vorrichtung (1060) bei Empfang des Befehls zum Herstellen der Sitzung ausgeführt werden, wobei die Schritte einschließen:
Erhalten von Information über ein erstes Format, das dem Benutzerendgerät zur Verfügung steht, vom Benutzerendgerät (1020) und Herstellen einer Sitzung zwischen dem Benutzerendgerät (1020) und dem Server zum provisorischen Koppeln (1070);
Erhalten von Information über ein zweites Format von Streamingdaten, welche die Streamingdaten-Zuführungsvorrichtung (1030) zuführt, von der Streamingdaten-Zuführungsvorrichtung (1030) und Herstellen einer Sitzung zwischen der Streamingdaten-Zuführungsvorrichtung (1030) und dem Server zum provisorischen Koppeln (1070);
Auswählen eines Formatumwandlungsservers (1041), der das zweite Format der Streamingdaten in das erste Format umwandelt, aus den mehreren Formatumwandlungsservern (1041);
Übertragen der Sitzung zwischen der Streamingdaten-Zuführungsvorrichtung (1030) und dem Server zum provisorischen Koppeln (1070) zu einer Sitzung zwischen der Streamingdaten-Zuführungsvorrichtung (1030) und dem ausgewählten Formatumwandlungsserver (1041); und
Übertragen der Sitzung zwischen dem Benutzerendgerät (1020) und dem Server zum provisorischen Koppeln (1070) zu einer Sitzung zwischen dem Benutzerendgerät (1020) und dem ausgewählten Formatumwandlungsserver (1041).

7. Streamingdaten-Zuführungsverfahren nach Anspruch 6,
wobei der Dienstleistungs-Leitweglenkungscomputer (1000) eine Benutzerattribut-Informationsdatenbank einschließt, welche Benutzerattributinformation für jeden Benutzer speichert, der das Benutzerendgerät (1020) benutzt, eine Zuführungsrichtlinien-Datenbank, welche eine Korrelation zwischen einer Kennung eines Elements der Streamingdaten und der Benutzerattributinformation als Zuführungsrichtlinie (1014) zu speichern, und eine Verarbeitungsserverliste (1015), welche eine Verarbeitungsaufgabe (3041), die für die Streamingdaten gemäß der Zuführungsrichtlinie (1014) durchzuführen ist, und eine Kennung eines Verarbeitungsservers (1041, 1042, 1043), der die Verarbeitungsaufgabe (3041) durchführt, korreliert und speichert,
wobei das Streamingdaten-Zuführungsverfahren ferner die folgenden Schritte umfasst, die vom Dienstleistungs-Leitweglenkungscomputer (1000) ausgeführt werden:
Bezugnehmen auf die Zuführungsrichtlinien-Datenbank auf der Basis der Benutzerattributinformation von der Benutzerattribut-Informationsdatenbank und Identifizieren eines Verarbeitungsservers (1041, 1042, 1043), der eine Verarbeitungsaufgabe (3041) durchführen soll, die für die Streamingdaten durchzuführen ist, und
Übertragen eines Befehls zum Herstellen einer Sitzung zwischen der Streamingdaten-Zuführungsvorrichtung (1030) und dem Verarbeitungsserver (1041, 1042, 1043) und eines Befehls zum Herstellen einer Sitzung zwischen dem Verarbeitungsserver und dem ausgewählten Formatumwandlungsserver (1041), um die Streamingdaten über den identifizierten Verarbeitungsserver (1041, 1042, 1043) zu leiten, und
wobei das Streamingdaten-Zuführungsverfahren ferner die folgenden Schritte umfasst, die von der 3PCC-Vorrichtung (1060) ausgeführt werden:
als Antwort auf den Befehl zum Herstellen einer Sitzung zwischen der Streamingdaten-Zuführungsvorrichtung (1030) und dem Verarbeitungsserver (1041, 1042, 1043), Übertragen der Sitzung zwischen der Streamingdaten-Zuführungsvorrichtung (1030) und dem Server zum provisorischen Koppeln (1070) in eine Sitzung zwischen der Streamingdaten-Zuführungsvorrichtung (1030) und dem identifizierten Verarbeitungsserver (1041, 1042, 1043), anstelle der Übertragung der Sitzung zwischen der Streamingdaten-Zuführungsvorrichtung (1030) und dem Server zum provisorischen Koppeln (1070) in eine Sitzung zwischen der Streamingdaten-Zuführungsvorrichtung (1030) und dem ausgewählten Formatumwandlungsserver (1041); und als Antwort auf den Befehl zum Herstellen einer Sitzung zwischen dem identifizierten Verarbeitungsserver (1041, 1042, 1043) und dem ausgewählten Formatumwandlungsserver (1041), Herstellen der Sitzung zwischen dem identifizierten Verarbeitungsserver (1041, 1042, 1043) und dem ausgewählten Formatumwandlungsserver (1041).

8. Streamingdaten-Zuführungsverfahren nach Anspruch 6 oder 7, wobei der Dienstleistungs-Leitweglenkungscomputer (1000) mehrere Verarbeitungsserver (1041, 1042, 1043) identifiziert, die für jede Art von Verarbeitungsaufgaben (3041) bestimmt sind, die für die Streamingdaten durchgeführt werden sollen, und eine Route der Streamingdaten zu den mehreren identifizierten Verarbeitungsservern (1041, 1042, 1043) hin bestimmt.

9. Streamingdaten-Zuführungsverfahren nach Anspruch 7 oder 8, wobei das Benutzerattribut Information (3002, 3032) für den Benutzer hinsichtlich der Zuführung der Streamingdaten von der Streamingdaten-Zuführungsvorrichtung (1030) in Rechnung stellt und eine Verarbeitungsaufgabe (3041), die für die Streamingdaten in Bezug auf die Zuführungsrichtlinien-Datenbank auf der Basis der Benutzerabrechnungsinformation (3002, 3032) durchgeführt werden soll, darin besteht, zumindest entweder die Qualität der Streamingdaten zu begrenzen oder Werbung mit den Streamingdaten zu präsentieren.

10. Streamingdaten-Zuführungsverfahren nach Anspruch 7 oder 8, wobei das Benutzerattribut Information einstellt, die von dem Benutzer in Bezug auf die Zuführung der Streamingdaten von der Streamingdaten-Zuführungsvorrichtung (1030) eingegeben wird, und eine Verarbeitungsaufgabe (3041), die für die Streamingdaten in Bezug auf die Zuführungsrichtlinien-Datenbank auf der Basis der vom Benutzer eingegebenen Einstellinformation durchgeführt werden soll, darin besteht, eine vom Benutzer aufgegebene Nachricht (3013) an die Streamingdaten anzufügen.

## Revendications

1. Système de distribution de données en flux ("Streaming"), comprenant :
un dispositif de distribution de données en flux (1030) utilisant un protocole SIP (Session Initiation Protocol) ;
un serveur pour un couplage provisoire (1070) utilisant un SIP ;
une pluralité de serveurs de conversion de format (1041) utilisant un SIP qui exécutent une conversion de format des données en flux ;
un terminal utilisateur (1020) utilisant un SIP ;
un dispositif de contrôle 3PCC (Third Party Call Control) (1060) qui met en oeuvre un contrôle d'appel de tiers par SIP ; et
un ordinateur de routage de service (1000) qui est configuré pour transmettre un ordre pour établir une session entre le dispositif de distribution de données en flux (1030) et le terminal utilisateur (1020),
le dispositif 3PCC (1060), qui est configuré pour recevoir l'ordre pour établir la session, incluant :
un moyen pour obtenir des informations concernant un premier format disponible au terminal utilisateur depuis le terminal utilisateur (1020) et
établissant une session entre le terminal utilisateur (1020) et le serveur pour un couplage provisoire (1070) ;
un moyen pour obtenir des informations concernant un second format de données en flux que le dispositif de distribution de données en flux (1030) distribue depuis le dispositif de distribution de données en flux (1030) et établissant une session entre le dispositif de distribution de données en flux (1030) et le serveur pour un couplage provisoire (1070) ;
un moyen pour sélectionner un serveur de conversion de format (1041) qui convertit le second format des données en flux vers le premier format depuis la pluralité de serveurs de conversion de format (1041) ;
un moyen pour transférer la session entre le dispositif de distribution de données en flux (1030) et le serveur pour un couplage provisoire (1070) vers une session entre le dispositif de distribution de données en flux (1030) et le serveur de conversion de format sélectionné (1041) ; et
un moyen pour transférer la session entre le terminal utilisateur (1020) et le serveur pour un couplage provisoire (1070) vers une session entre le terminal utilisateur (1020) et le serveur de conversion de format sélectionné (1041).

2. Système de distribution de données en flux selon la revendication 1,
dans lequel l'ordinateur de routage de service (1000) inclut une base de données d'information d'attribut utilisateur qui est configurée pour stocker des informations d'attribut utilisateur pour chaque utilisateur qui utilise le terminal utilisateur (1020), une base de données de règles de distribution qui est configurée pour stocker une corrélation entre un identificateur d'un article des données en flux et les informations d'attribut utilisateur sous forme d'une règle de distribution (1014), et une liste de serveurs de traitement (1015) qui est configuré pour faire une corrélation et pour stocker une tâche de traitement (3041) à exécuter pour les données en flux en accord avec la règle de distribution (1014) et un identificateur d'un serveur de traitement (1041, 1042, 1043) qui est configuré pour exécuter la tâche de traitement (3041), et qui inclut en outre un moyen pour faire référence à la base de données de règles de distribution en se basant sur les informations d'attribut utilisateur provenant de la base de données des informations d'attribut utilisateur et identifier un serveur de traitement (1041, 1042, 1043) qui doit exécuter une tâche de traitement (3041) à exécuter pour les données en flux, et un moyen pour transmettre un ordre afin d'établir une session entre le dispositif de distribution de données en flux (1030) et le serveur de traitement (1041, 1042, 1043), et un ordre pour établir une session entre le serveur de traitement et le serveur de conversion de format sélectionné (1041), afin de mettre en route les données en flux via le serveur de traitement identifié (1041, 1042, 1043), et
dans lequel le dispositif 3PCC (1060) inclut un moyen pour, en réponse à l'ordre pour établir une session entre le dispositif de distribution de données en flux (1030) et le serveur de traitement (1041, 1042, 1043), transférer la session entre le dispositif de distribution de données en flux (1030) et le serveur pour un couplage provisoire (10 70) en une session entre le dispositif de distribution de données en flux (1030) et le serveur de traitement identifié (1041, 1042, 1043), au lieu de transférer la session entre le dispositif de distribution de données en flux (1030) et le serveur pour un couplage provisoire (1070) vers une session entre le dispositif de distribution de données en flux (1030) et le serveur de conversion de format sélectionné (1041), et des moyens pour, en réponse à l'ordre d'établir une session entre le serveur de traitement identifié (1041, 1042, 1043) et le serveur de conversion de formats sélectionnés (1041), établir la session entre le serveur de traitement identifié (1041, 1042, 1043) et le serveur de conversion de format sélectionné (1041).

3. Système de distribution de données en flux selon la revendication 1 ou 2, dans lequel l'ordinateur de routage de service (1000) est configuré pour identifier une pluralité de serveurs de traitement (1041, 1042, 1043) dédiés pour chaque type de tâche de traitement (3041) à exécuter pour les données en flux et pour déterminer un routage des données en flux vers la pluralité de serveurs de traitement (1041, 1042, 1043) identifiés.

4. Système de distribution de données en flux selon la revendication 2 ou 3, dans lequel l'attribut utilisateur est une information de chargement (3002, 3032) pour l'utilisateur à l'égard de la distribution des données en flux depuis le dispositif de distribution de données en flux (1030) et une tâche de traitement (3041) à exécuter pour les données en flux par référence à la base de données de règles de distribution basée sur les informations de chargement utilisateur (3002, 3032) consiste au moins soit à limiter la qualité des données en flux soit à présenter une publicité avec les données en flux.

5. Système de distribution de données en flux selon la revendication 2 ou 3, dans lequel l'attribut utilisateur est une information de choix entrée par l'utilisateur à l'égard de la distribution des données en flux depuis le dispositif de distribution de données en flux (1030) et une tâche de traitement (3041) à exécuter pour les données en flux par référence à la base de données de règles de distribution basée sur l'information de choix entrée par l'utilisateur consiste à ajouter un message postal à l'utilisateur (3013) au données en flux.

6. Procédé de distribution de données en flux à utiliser dans un système de distribution de données en flux incluant un dispositif de distribution de données en flux (1030) utilisant un protocole SIP (Session Initiation Protocol) ; un serveur pour couplage provisoire (1070) utilisant un SIP ; une pluralité de serveurs de conversion de format (1041) utilisant un SIP qui exécutent une conversion de format des données en flux ; un terminal utilisateur (1020) utilisant un SIP ; un dispositif de contrôle 3PCC (1060) (Third Party Call Control) qui met en oeuvre un contrôle d'appel de tiers par SIP ; et un ordinateur de routage de service (1000) qui transmet un ordre pour établir une session entre le dispositif de distribution de données en flux (1030) et le terminal utilisateur (1020), le procédé de distribution de données en flux comprenant un groupe d'étapes qui sont effectuées par le dispositif 3PCC (1060) lors de la réception de l'ordre pour établir la session, ces étapes incluant :
l'obtention d'informations concernant un premier format disponible au terminal utilisateur (1020) depuis le terminal utilisateur (1020) et
l'établissement d'une session entre le terminal utilisateur (1020) et le serveur pour un couplage provisoire (1070) ;
l'obtention d'informations concernant un second format de données en flux que le dispositif de distribution de données en flux (1030) distribue depuis le dispositif de distribution de données en flux (1030), et
l'établissement d'une session entre le dispositif de distribution de données en flux (1030) et le serveur pour un couplage provisoire (1070) ;
la sélection d'un serveur de conversion de format (1041) qui convertit le second format des données en flux vers le premier format parmi la pluralité de serveurs de conversion de format (1041) ;
le transfert de la session entre le dispositif de distribution de données en flux (1030) et le serveur pour un couplage provisoire (1070) dans une session entre le dispositif de distribution de données en flux (1030), et le serveur de conversion de format sélectionné (1041) ; et
le transfert de la session entre le terminal utilisateur (1020) et le serveur pour un couplage provisoire (1070) vers une session entre le terminal utilisateur (1020) et le serveur de conversion de format sélectionné (1041).

7. Procédé de distribution de données en flux selon la revendication 6, dans lequel l'ordinateur de routage de service (1000) inclut une base de données d'informations d'attribut utilisateur qui stocke des informations d'attribut utilisateur pour chaque utilisateur qui utilise le terminal utilisateur (1020), une base de données de règles de distribution qui stocke une corrélation entre un identificateur d'un article des données en flux et les informations d'attribut utilisateur comme une règle de distribution (1014), et une liste de serveurs de traitement (1015) qui fait une corrélation et qui stocke une tâche de traitement (3041) à exécuter pour les données en flux en accord avec la règle de distribution (1014), et un identificateur d'un serveur de traitement (1041, 1042, 1043) qui exécute la tâche de traitement (3041),
le procédé de distribution de données en flux comprenant en outre les étapes suivantes, qui sont effectuées par l'ordinateur de routage de service (1000), consistant à :
faire référence à la base de données de règles de distribution basée sur les informations d'attribut utilisateur depuis la base de données d'informations d'attribut utilisateur et identifier un serveur de traitement (1041, 1042, 1043) qui doit exécuter une tâche de traitement (3041) à exécuter pour les données en flux ; et
transmettre un ordre pour établir une session entre le dispositif de distribution de données en flux (1030) et le serveur de traitement (1041, 1042, 1043) et un ordre pour établir une session entre le serveur de traitement (1041, 1042, 1043) et le serveur de conversion de format sélectionné (1041) afin de faire un routage des données en flux via le serveur de traitement identifié (1041, 1042, 1043), et
le procédé de distribution de données en flux comprenant en outre les étapes suivantes, qui sont effectuées par le dispositif 3PCC (1060), consistant à :
en réponse à l'ordre d'établir une session entre le dispositif de distribution de données en flux (1030) et le serveur de traitement (1041, 1042, 1043), transférer la session entre le dispositif de distribution de données en flux (1030) et le serveur pour un couplage provisoire (1070) vers une session entre le dispositif de distribution de données en flux (1030) et le serveur de traitement identifié (1041, 1042, 1043), au lieu de transférer la session entre le dispositif de distribution de données en flux (1030) et le serveur pour un couplage provisoire (1070) vers une session entre le dispositif de distribution de données en flux (1030) et le serveur de conversion de format sélectionné (1041) ; et, en réponse à l'ordre d'établir une session entre le serveur de traitement identifié (1041, 1042, 1043) et le serveur de conversion de format sélectionné (1041), établir la session entre le serveur de traitement identifié (1041, 1042, 1043) et le serveur de conversion de format sélectionné (1041).

8. Procédé de distribution de données en flux selon la revendication 6 ou 7, dans lequel l'ordinateur de routage de service (1000) identifie une pluralité de serveurs de traitement (1041, 1042, 1043) dédiés pour chaque type de tâche de traitement (3041) à effectuer pour les données en flux, et détermine un routage des données en flux vers la pluralité de serveurs de traitement (1041, 1042, 1043) identifiés.

9. Procédé de distribution de données en flux selon la revendication 7 ou 8, dans lequel l'attribut utilisateur est une information de chargement (3002, 3032) pour l'utilisateur à l'égard de la distribution des données en flux depuis le dispositif de distribution de données en flux (1030), et une tâche de traitement (3041) à exécuter pour les données en flux par référence à la base de données de règles de distribution en se basant sur les informations de chargement utilisateur (3002, 3032) consiste au moins soit à limiter la qualité des données en flux soit à présenter une publicité avec les données en flux.

10. Procédé de distribution de données en flux selon la revendication 7 ou 8, dans lequel l'attribut utilisateur est une information de choix entrée par l'utilisateur à l'égard de la distribution des données en flux depuis le dispositif de distribution de données en flux (1030), et une tâche de traitement (3041) à exécuter pour les données en flux par référence à la base de données de règles de distribution en se basant sur les informations de choix entrées par l'utilisateur consiste à ajouter un message postal pour l'utilisateur (3013) aux données en flux.
